# EUROPEAN PATENT APPLICATION

(11) **EP 3 410 348 A1**
(43) Date of publication of application: **05.12.2018**
(21) Application number: 18173840.2
(22) Date of filing: 23.05.2018
(51) Int. Cl.: G06K 9/00

(54) **METHOD AND APPARATUS FOR BUILDING A PARKING OCCUPANCY MODEL**

(30) Priority: 31.05.2017 US 201715610237
(71) Applicant: HERE Global B.V., 5611 ZT Eindhoven (NL)
(72) Inventor: Yunjie, Zhao, Evanston, IL Illinois 60201 (US); Giurgiu, Gavril, Deerfield, IL Illinois 60015 (US); Cajias, Raul, 10245 Berlin (DE); Stenneth, Leon, Chicago, IL Illinois 60608 (US); Linder, Eric, Downers Grove, IL Illinois 60516 (US)
(74) Representative: Cohausz & Florack

(57) **Abstract**

An approach is provided for generating parking occupancy data using a machine learning model. The approach involves determining one or more classification features of a road link. The approach also involves processing the one or more classification features using the machine learning model to match the road link to a link category. The approach further involves determining a parking occupancy pattern for the road link based on the link category. The approach further involves creating or updating a parking occupancy record of a geographic record corresponding to road link using the parking occupancy pattern.

## Description

### BACKGROUND

Providing street parking navigation options is an area of interest for many navigation service providers and original equipment manufacturers (OEMs). For example, service providers and OEMs can create and maintain a geographic database of parking data along various road links or street segments. However, populating the geographic database with data such as parking occupancy data (e.g., whether parking spaces along a particular road link, street segment, or other parking facility are occupied) can be a resource intensive process. As a result, a typical geographic database may have parking occupancy data for only a fraction of the road links or other parking facilities stored in the database.

### SOME EXAMPLE EMBODIMENTS

Therefore, there is a need for an approach for building parking occupancy models for links and/or parking facilities represented in a geographic database.

According to one embodiment, a method for generating parking occupancy data using a machine learning model comprises determining one or more classification features of a road link. The method also comprises processing the one or more classification features using the machine learning model to match the road link to a link category. The method further comprises determining a parking occupancy pattern for the road link based on the link category. The method further comprises creating or updating a parking occupancy record of a geographic record corresponding to road link using the parking occupancy pattern.

According to another embodiment, an apparatus for generating parking occupancy data using a machine learning model comprises at least one processor, and at least one memory including computer program code for one or more computer programs, the at least one memory and the computer program code configured to, with the at least one processor, cause, at least in part, the apparatus to determine one or more classification features of a road link. The apparatus also is caused to process the one or more classification features using the machine learning model to match the road link to a link category. The apparatus further is caused to determine a parking occupancy pattern for the road link based on the link category. The apparatus further is caused to create or update a parking occupancy record of a geographic record corresponding to road link using the parking occupancy pattern.

According to another embodiment, a non-transitory computer-readable storage medium for generating parking occupancy data using a machine learning model carries one or more sequences of one or more instructions which, when executed by one or more processors, cause, at least in part, an apparatus to determine one or more classification features of a road link. The apparatus also is caused to process the one or more classification features using the machine learning model to match the road link to a link category. The apparatus further is caused to determine a parking occupancy pattern for the road link based on the link category. The apparatus further is caused to create or update a parking occupancy record of a geographic record corresponding to road link using the parking occupancy pattern.

According to another embodiment, an apparatus comprises means for determining one or more classification features of a road link. The apparatus also comprises means for processing the one or more classification features using the machine learning model to match the road link to a link category. The apparatus further comprises means for determining a parking occupancy pattern for the road link based on the link category. The apparatus further comprises means for creating or updating a parking occupancy record of a geographic record corresponding to road link using the parking occupancy pattern.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of any of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system for building parking occupancy models, according to one embodiment;
FIG. 2A is a diagram illustrating a map of road links configured with parking sensors that can be used as ground truth data for building parking occupancy models, according to one embodiment;
FIGs. 2B-2E are diagrams illustrating parking occupancy patterns of ground truth road links, according to one embodiment;
FIG. 3 is a diagram of a process for training a parking occupancy model, according to one embodiment;
FIG. 4 is a diagram of a geographic database, according to one embodiment;
FIG. 5 is a diagram of the components of a parking platform, according to one embodiment;
FIG. 6 is a flowchart of a process for creating or updating parking occupancy data from a parking occupancy model, according to one embodiment;
FIG. 7 is a flowchart of a process for training a parking occupancy model, according to one embodiment;
FIG. 8 is a flowchart of a process for selecting classification features for building a parking occupancy mode, according to one embodiment;
FIGs. 9A-9D are diagrams of histograms for example classification features, according to one embodiment;
FIG. 10 is a diagram of a histogram of parking availability/occupancy per road link per one-hour epoch, according to one embodiment;
FIG. 11 is a diagram depicting correlations among example classification features, according to one embodiment;
FIGs. 12A-12D are diagrams depicting parking availability/occupancy with respect to example individual classification features, according to one embodiment;
FIGs. 13A and 13B depict example parking availability/occupancy data for example links with example classification features, according to one embodiment;
FIG. 14 is a diagram of an example navigation user interface presenting parking occupancy data generated using a parking occupancy model, according to one embodiment;
FIG. 15 is a diagram of hardware that can be used to implement an embodiment;
FIG. 16 is a diagram of a chip set that can be used to implement an embodiment; and
FIG. 17 is a diagram of a mobile terminal (e.g., mobile computer) that can be used to implement an embodiment.

### DESCRIPTION OF SOME EMBODIMENTS

Examples of a method, apparatus, and computer program for building parking occupancy models are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

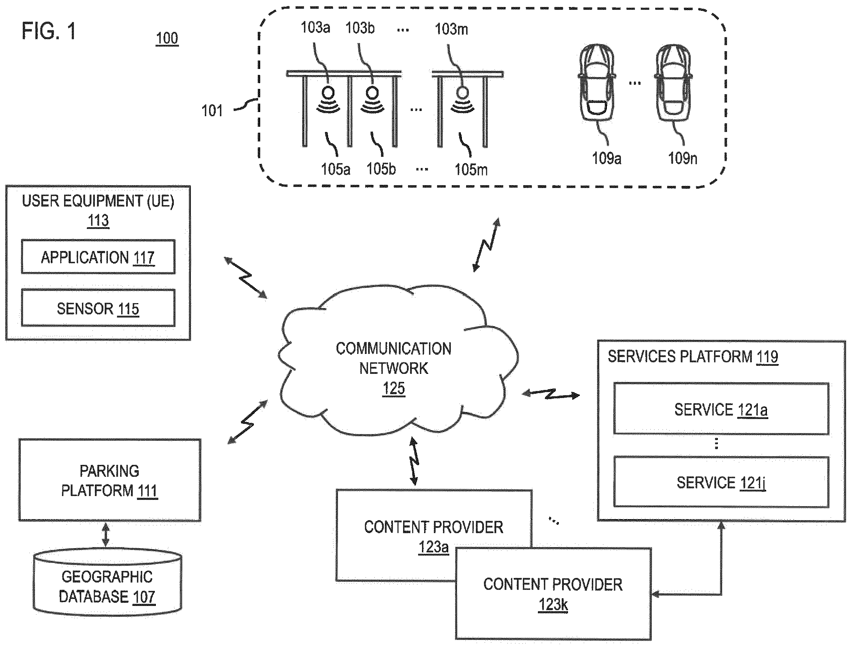

FIG. 1 is a diagram of a system for building parking occupancy models, according to one embodiment. As discussed above, providing street parking navigation options is an area of interest for service providers, original equipment manufacturers (OEMs), and/other navigation related companies. For example, looking for parking (e.g., on-street parking or parking in other types of parking facilities), particularly in urban or congested areas, can be stressful and difficult for drivers. In some cases, a significant amount of traffic congestion in cities (e.g., approximately 30% in some cases) can be caused by drivers circling around their intended destinations to look for available parking spaces. Accordingly, OEMs consider a service to provide parking occupancy information to be a key differentiator from their competition. Parking occupancy information, for instance, refers to data indicating how many parking spaces are occupied (or conversely how many parking spaces are available) on a given road link or other parking facility (e.g., parking garage, parking lot, etc.)

However, because of the highly dynamic nature of parking occupancy or availability, service providers and OEMs face significant technical challenges to efficiently and accurately gathering parking occupancy data. To address this challenge, cities (e.g., San Francisco, Melbourne, etc.) have deployed parking sensors (e.g., in-ground parking sensors or equivalent) to monitor on-street parking spots along various road links or street segments. In-ground sensors, for instance, can provide accurate and real-time parking occupancy. However, this approach can be very expensive because parking sensors often are needed to be installed and maintained for each parking spot to be monitored. Therefore, because of the current cost of the installation, maintenance, and operation of such parking sensors, a fully sensor-based approach can be impractical for large-scale deployment across all road links. As a result, parking sensors currently are being used in only a few densely populated areas that can afford the accompanying infrastructure.

As an alternative approach to parking sensors, some service providers have used location trace or probe data to determine parking occupancy or availability. For example, the general methodology for this traditional approach involves the analysis of the location trace or probe data (e.g., GPS probe data) to derive park-in and park-out events. However, because of the high volumes of the probe data (e.g., thousands or potentially millions of location traces), continuously performing the analysis as new probe data is collected can require significant computational resources. In addition, extracting parking events (e.g., park-in and park-out events from specific spaces) can potentially be susceptible to higher uncertainty than the parking sensor approach because of the limited accuracy of location data (e.g., satellite-based location data such as GPS data) may make it difficult to pinpoint events to specific parking spaces without additional processing.

To address this problem, a system 100 of FIG. 1 introduces a capability build a historical parking occupancy model for a parking service using machine learning. In one embodiment, the system 100 gathers historical parking occupancy data from parking areas 101 that have been designated as having ground truth parking occupancy data. The parking areas 101 may span any geographic boundary (e.g., neighborhoods, cities, regions, etc.) that include a variety of road links or other parking facilities where parking sensors 103a-103m (also collectively referred to as parking sensors 103) are deployed in respective parking spaces 105a-105m (also collectively referred to as parking spaces 105).

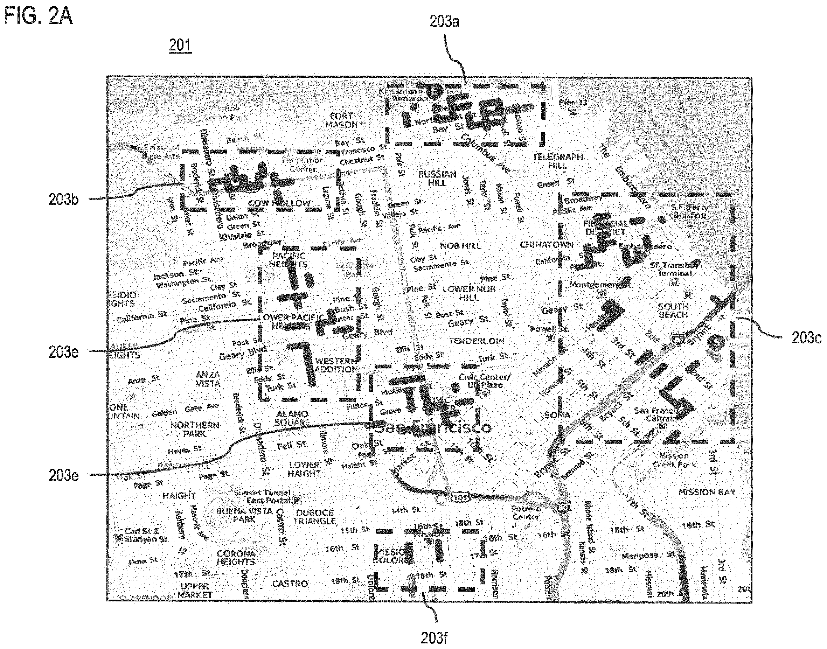

For example, FIG. 2A illustrates example parking areas 101 of a city 201 (e.g., areas 203a-203f, also collectively referred to as areas 203 of the city 201) in which parking sensors 103 are installed. The areas 203 include multiple road links or street segments. In one embodiment, the road links or street segments are represented as link records in the geographic database 107. Accordingly, to use the city 201 (e.g., San Francisco) as the ground truth city for building a parking occupancy model, the system 100 can gather historical parking occupancy data from the parking sensors 105 located within the areas 203.

In one embodiment, the historical parking occupancy data comprise parking parameters including, but not limited to, a park-in time (e.g., time at which at one of the vehicles 109a-109n, also collectively referred to as vehicles 109, parks in the parking space 205) and a park-out time (e.g., time at which the vehicle 109 leaves the parking space). By way of example, the parking space 105 is unavailable or occupied during period between the park-in time and the park-out time, and available or unoccupied outside this period. In some embodiments, other parking parameters in the parking occupancy data can include location of the parking space 105, an identifier (ID) of the parking space 105, type of parking space (e.g., on-street, metered, restricted time, etc.), and/or other contextual parameters (e.g., weather, date, weekday/weekend, season, etc.).

In addition or as an alternative to ground truth data from parking sensors 103, the system 100 can also use parking occupancy data collected in the parking areas 101 using any other equivalent means. For example, the historical parking occupancy data of the parking areas 101 can be determined from location trace or probe data collected or reported from vehicles 109 as they park in or leave the parking spaces 105. In other words, the probe data from the vehicles 109 can be used to calculate park-in and park-out parameters. These parameters are analogous to the parking parameters as described above with respect to the parking sensors 103, but generated from probe data. In one embodiment, the system 100 can use only parking sensor 103 based data in place of probe based data if the uncertainty of the probe data is above a threshold value.

Although various embodiments are described with respect to parking spaces 105 that are on-street parking along road links or street segments, it is contemplated that the embodiments are also applicable to determining parking occupancy data for any parking facility (e.g., parking garages, parking lots, etc.) represented in a geographic database 107.

After gathering the historical parking occupancy data (e.g., from parking sensors 103, probe data collected from vehicles 109, and/or any other equivalent data source), the system 100 (e.g., using a parking platform 111) applies a machine learning clustering algorithm to identify different parking occupancy patterns. These parking occupancy patterns occur, for instance, can be calculated for each road link, street segment, parking facility, etc. of the parking areas 101 for which historical parking occupancy data is available. The road links, street segments, parking facilities, etc. can then be clustered according to similarity of their respective parking occupancy patterns.

In one embodiment, the parking occupancy patterns represent parking occupancy (e.g., number of parking spots in a respective road link or street segment that is occupied) versus time. In one embodiment, the parking occupancy pattern can span any period of time. In the examples described herein, the time period is a one-day or 24-hour period. For example, some streets or road links are always fully occupied 24 hours a day by 7 days a week. Other streets have high occupancy during the day time and low occupancy early in the morning and late at night.

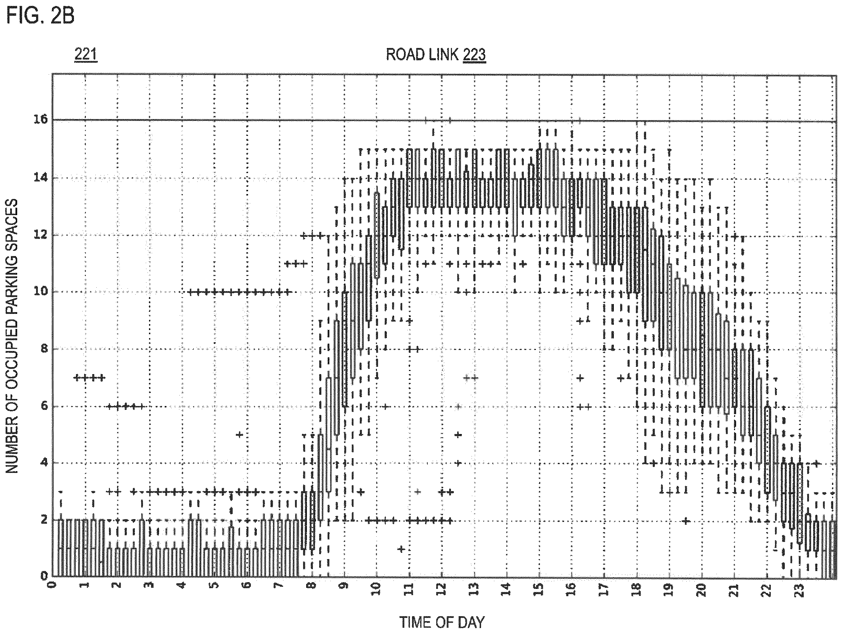

FIGs. 2B-2E illustrate example parking occupancy patterns for road links of different features types. FIG. 2B illustrates a parking occupancy pattern 221 for a road link 223 located in CBD of a city. In this example, the CBD consists mainly of office buildings that maintain standard office hours (e.g., 9 a.m. - 5 p.m.). Accordingly, the parking occupancy pattern 221 indicates that parking spaces 105 along the road link 223 are mostly available early in the morning and fill up quickly beginning around 8 a.m. Then the parking occupancy decreases after 5 p.m. This parking occupancy pattern 221 is similar for working weekdays.

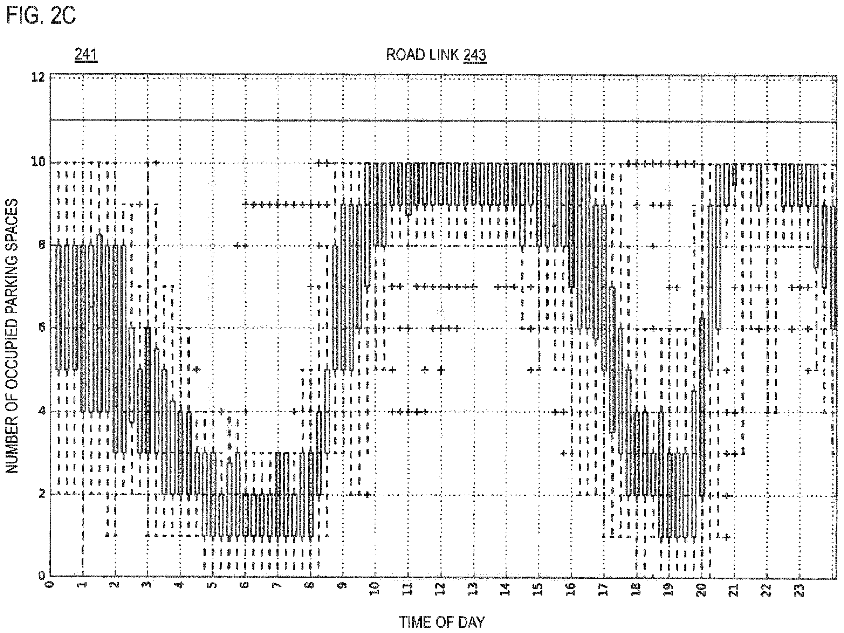

FIG. 2C illustrates a parking occupancy pattern 241 for a road link 243 that is also located in the CBD but includes a restaurant point of interest (POI) or other similar POI. When compared to the parking occupancy pattern 221 (e.g., which is in the CBD but has no restaurant POI), the restaurant or other POI attracts parking demand after standard business hours. As a result, the parking occupancy pattern 241 shows increased demand from approximately 8 p.m. to 2 a.m. (the approximate operating hours of the restaurant).

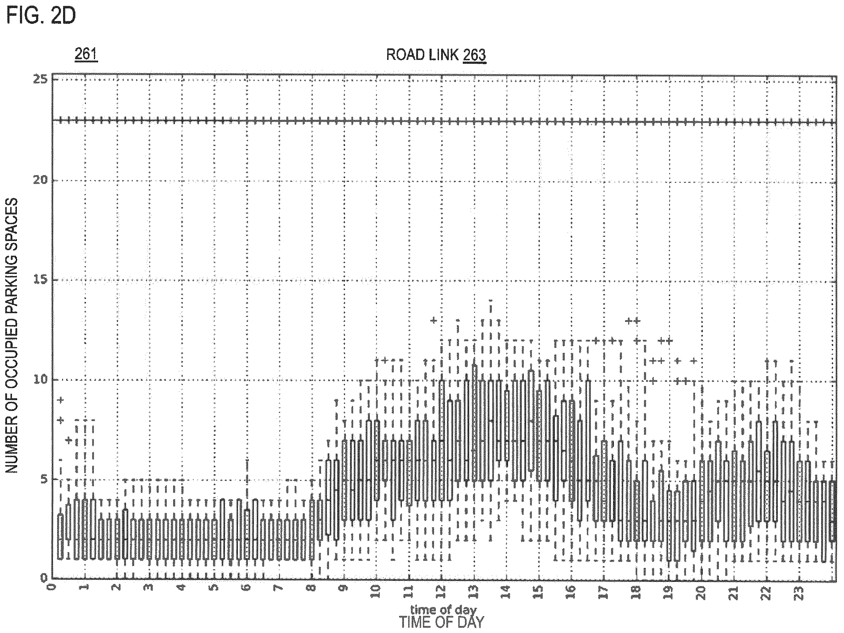

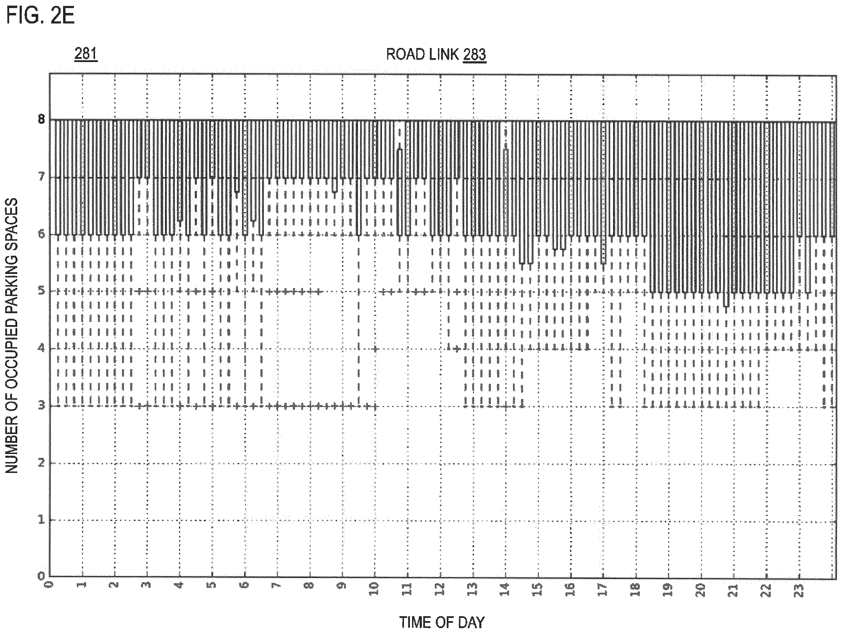

FIGs. 2D and 2E show other example parking occupancy patterns that are possible. For example, the parking occupancy pattern 261 of FIG. 2D for a road link 263 is a low occupancy pattern where parking occupancy is generally low throughout the day with only a slight increase during the middle of the day. This pattern 261 can indicate that the road link 263 is not near residential or business areas that would drive traffic to the road link 263. In contrast, the parking occupancy pattern 281 of FIG. 2E shows a high occupancy road link 283 in which its parking spots are almost always fully occupied 24 hours a day by 7 days a week. For example, the road link 283 can be located in a busy center that includes a large number of commercial and residential POIs (e.g., skyscrapers with a large number of business and residential units).

It is noted that the examples of FIG. 2B-2E are provided by way of illustration and not as limitations. It is contemplated that any number or varieties of parking occupancy patterns can be extracted from the gathered historical parking occupancy data for a given parking area 101.

As described above, in one embodiment, the system 100 generates a parking occupancy pattern for each road link or street segment for which historical data is available in a given parking area 101. The system 100 can then cluster the road links or street segments based on the similarity of their respective parking occupancy patterns. As an example, the system 100 can apply dynamic time warping (DTW) or other equivalent clustering algorithm to cluster the streets with similar parking occupancy patterns.

In one embodiment, to understand the similar occupancy patterns of streets in the same cluster, the system 100 performs feature engineering to extract any features (e.g., characteristics of the street, parking spaces 105, context, etc.) that may contribute to the observed parking occupancy behavior. Those features may include, but not limited to, POI types, POI density, census data (e.g. population), transit accessibility, district type (e.g., central business district (CBD), residential), epoch (e.g., time epoch such as hourly segmentation of the parking occupancy data), weekday versus weekend, bi-directionality, etc.

In one embodiment, the system 100 selects the specific classification features to train a parking occupancy model (e.g., a machine learning model) so that the selected features have high intra-cluster similarity, but low inter-cluster similarity. In yet another embodiment, the system 100 may select classification features based on the availability of feature data from one or more of its available databases. For example, the system 100 can select only those features whose values can be obtained from the geographic database 107. As additional feature data is added to the geographic database 107, the features available for classification can also be increased. For example, in one embodiment, zoning (e.g., commercial versus residential) and/or population density at a given location may not be available in the geographic database 107. Consequently, the system 100 may not include zoning or population density as classification features. In one embodiment, when one classification feature is not available in the geographic database 107, the system 100 can select another classification feature that is positively correlated with the unavailable classification feature with respect to determining parking availability.

In yet another embodiment, the system 100 can rank potential classification features according to their classification power for determining the classification target (e.g., parking available or unavailable for a given link). The system 100 can then remove the one or more of the features having the least amount of classification power, or classification power below a threshold value. In one embodiment, the system 100 can combine the ranking selection process with selection based on availability in the geographic database 107. In this way, those features with low classification power and whose values for the road links of interest are not available in the geographic database 107 can be removed from training the parking occupancy model. In one embodiment, the system 100 can use any feature ranking algorithm including, but not limited to, information gain algorithm, OneR attribute evaluation, or equivalent.

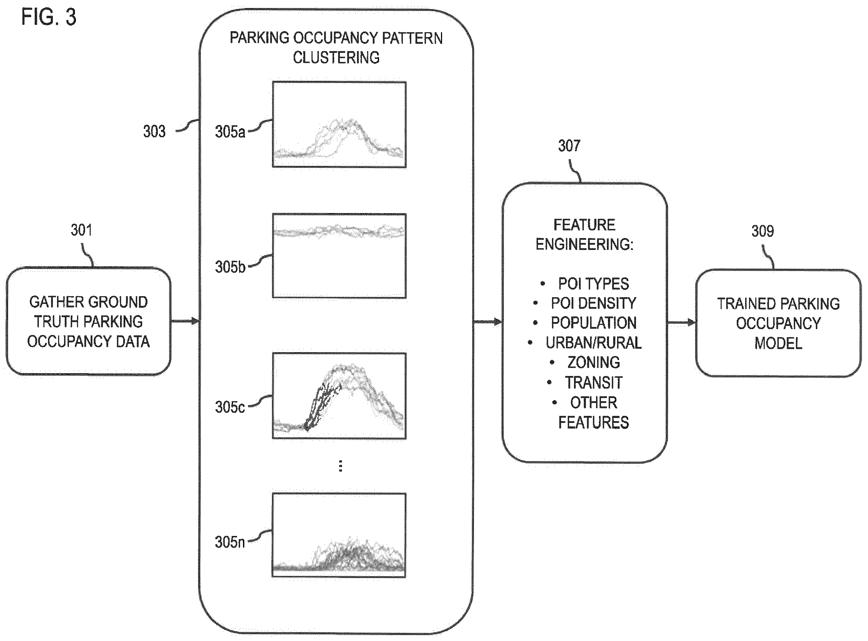

FIG. 3 is a diagram summarizing the model training process described above, according to one embodiment. At process 301, the system 100 gathers ground truth parking occupancy data from one or more trusted sources. In one embodiment, the sources are cites in which parking sensors 103 have been installed in at least some parking areas 101 of the city. Parking occupancy data generated from parking sensors 103 (e.g., in-ground parking sensors) embedded in respective parking spaces 105 can provide accurate and reliable information on park-in and park-out events at each respective space 105.

At process 303, the system 100 generates parking occupancy patterns for each road link or street segment in the ground truth parking occupancy data. The system 100 then clusters the resulting parking occupancy patterns based on their similarities into one or more clusters 305a-305n (also collectively referred to as clusters 305). In other words, each cluster 305 represents a potential category of links that share similar parking occupancy patterns.

At process 307, the system 100 performs feature engineering or selection of the links grouped into each cluster 305. For example, the system 100 can use a machine learning process (e.g., Bayes Net, Random Forest, Decision Trees, etc.) or any other equivalent mode to select a set of classification features that maximizes inter-cluster differentiation, so that classification features can be used to distinguish among the different clusters or link categories. At process 309, the engineered or selected features can then be used to train a parking occupancy model to predict parking occupancy classifications for new links or street segments. In one embodiment, the trained parking occupancy model receives values of the classification features determined for a road link (e.g., a road link for which new or updated parking occupancy data is to be generated) as an input, and then outputs a parking occupancy or availability prediction for the road link. By way of example, the output can be a parking occupancy pattern or template and/or a probability of parking availability or occupancy on the road link.

In one embodiment, to predict the occupancy pattern for a new street or road link, the system 100 can use a collaborative filtering method to match the classification features against the representative classification features for each cluster 305 determined from the clustering process described above. This matching, for instance, is performed using a parking occupancy model that has been trained based on the selected classification features according to the various embodiments described herein. In other words, the system 100 uses a trained machine learning model to look for a cluster 305 with the most similar classification features as the new link street or street segment. Then, the system 100 makes a prediction of the parking occupancy pattern for the new street based on the parking occupancy pattern associated with the most similar cluster 305 of links or street segments in the ground truth data.

In one embodiment, when machine learning classification is used, the output the parking occupancy model can be a probability that given a set of features for a link of interest, the link is classified as either (1) having a particular parking occupancy pattern, and/or (2) having parking available or parking unavailable to indicate parking occupancy at the link. In other words, the prediction is made based on a probability range spanning from 0% to 100% probability that a link has a particular parking occupancy pattern or has parking available (e.g., 0 < classification probability < 1).

In one embodiment (e.g., when the parking occupancy model outputs a probability), the system 100 can specify different parking availability probability thresholds or "cuts" to classify a link as either having parking available or unavailable. For example, a threshold or cut of 0.1 or any specified value means that all links classified with parking availability thresholds greater than 0.1 or the specified value will be classified as having parking available. In one embodiment, the system 100 can vary the threshold to optimize accuracy and/or other classification metrics (e.g., true positive rates, false positive rates, precision, recall, F-measure, receiving operating characteristic (ROC) area under the curve, etc.).

Returning to FIG. 1, the system 100 includes the parking platform 111 for performing the processes for building parking occupancy models according to the various embodiments described herein. As shown, the parking platform 111 has connectivity to a parking data infrastructure comprising the parking sensors 103 (e.g., in-ground parking sensors or equivalent) embedded in the parking spaces 105, and the vehicles 109 for collecting probe data or location traces from which parking occupancy data can also be determined. The parking sensors 103 can be any type of sensor capable of detecting when a vehicle 109 parks in or leaves a parking space 105 (e.g., embedded magnetic sensors, imaging sensors, etc.), and then storing or transmitting the collected sensor data as parking occupancy data. In addition or alternatively, each vehicle 109 can be equipped with sensors (e.g., location sensors) that can also detect when the vehicle 109 parks in or leaves a parking space 105, for storage or transmission as parking occupancy data.

In one embodiment, the vehicles 109 and/or one or more user equipment 113 associated with a vehicle 109 can act as probes traveling over a road network represented in the geographic database 107. Although the vehicle 109 is depicted as an automobile, it is contemplated that the vehicle 109 can be any type of transportation vehicle manned or unmanned (e.g., motor cycles, buses, trucks, boats, bicycles, etc.) capable of parking in a parking space 105, and the UE 113 can be associated with any of the types of vehicles 109 or a person or thing traveling through the road network of the geographic database 107. For example, the UE 113 can be a standalone device (e.g., mobile phone, portable navigation device, wearable device, etc.) or installed/embedded in the vehicle 109. In one embodiment, the vehicle 109 and/or UE 113 may be configured with one or more sensors 115 for determining parking data. By way of example, the sensors 115 may include location sensors (e.g., GPS), accelerometers, compass sensors, gyroscopes, altimeters, etc. In one embodiment, the sensors 115 can also be used to detect and report status data about an operational state of the vehicle 109 to assist in determining when the vehicle 109 parks in or leaves a parking space 105. For example, a parking event may be detected when it is determined that a vehicle's is engine off, the key is outside of the car, the vehicle door is locked, and/or the like. In one embodiment, the vehicle 109 and/or UE 113 are assigned unique probe identifiers (probe ID) for use in reporting or transmitting collected probe data for determining parking occupancy data. The vehicle 109 and UE 113, for instance, are part of a probe-based system for collecting probe data for building parking occupancy models according to the various embodiments described herein.

In one embodiment, when a vehicle 109 and/or UE 113 (e.g., via a navigation system, navigation application 117, and/or the like) requests instructions to find parking in a given area or location, the parking platform 111 can use the parking occupancy model to determine a parking occupancy pattern for links in which parking is requested. The parking platform 111 can then provide the parking occupancy data to the vehicle 109 and/or the UE 113 for presentation in a mapping or navigation user interface. For example, the predicted parking occupancy data can be used to route a user (e.g., routing to a nearest parking area to the user's destination with parking availability), to provide a better estimated time of arrival (ETA) at a given destination depending on parking availability, etc.

In one embodiment, as noted above, the vehicles 109 are equipped with an embedded navigation systems or other navigation devices (e.g., a UE 113) that are capable of submitting requests for parking information (e.g., parking availability, etc.), and of guiding a driver of the vehicle 109 along a navigation route using the parking information. In one embodiment, as the driver navigates along the received route, the vehicles 109 and/or UE 113 (e.g., via a navigation application 117) may receive real-time updates on parking occupancy data predicted for road links or street segments near a destination of the navigation route (e.g., links or street segments within a threshold distance of the destination).

In one embodiment, requests for parking instructions or information (e.g., waiting times to park) can be triggered by interactions with a user interface of the vehicle 109 and/or UE 113 (e.g., an explicit request from a user or driver), or automatically when the driver or vehicle 109 approaches a target destination (e.g., a set destination, an inferred destination, and/or any other known destination). In yet another embodiment, the vehicle 109 and/or UE 113 can initiate a request for parking occupancy data for links of interest when the vehicle 109 is detected to have initiated a parking search (e.g., by creating location traces or trajectory data indicating circling, slowing down, multiple U-turns, etc. within an area of the destination). In this way, the parking occupancy data can be provided even when no destination is set or known by the system 100.

In yet another embodiment, the predicted parking occupancy data generated for each new or updated road link can be used to build or update the geographic database 107. As discussed above, obtaining parking occupancy data using traditional means can be resource intensive. As a result, many parking occupancy records for road links stored in the geographic database 107 may not be populated. In this case, the system 100 can use the parking occupancy model to predict parking occupancy data for these road links without having to use traditional means (e.g., direct sensing of the occupancy data using parking sensors 103, analysis probe data to determine occupancy data, etc.).

In one embodiment, the vehicle 109 and/or UE 113 are configured to report probe data as probe points, which are individual data records that record telemetry data collected at a point in time. In one embodiment, a probe point can include attributes such as a heading, a speed, a time, or a combination thereof of each of the plurality of devices. At least some of these attributes can also be used as classification features. It is contemplated that any combination of these attributes or other attributes may be recorded as a probe point. As previously discussed, the vehicle 109 may include sensors for reporting measurements and/or reporting attributes. The attributes can also be any attribute normally collected by an on-board diagnostic (OBD) system of the vehicle, and available through an interface to the OBD system (e.g., OBD II interface or other similar interface). These attributes can be activation of backup sensors, steering angle, activation of brakes, etc. that can potentially be indicative of parking-related behavior.

In one embodiment, the parking platform 111, the vehicles 109, and/or the UE 113 can interact with a service platform 119, one or more services 121a-121j (also collectively referred to as services 121), one or more content providers 123a-123k (also collectively referred to as content providers 123), or a combination thereof over communication network 125 to provide functions and/or services based on the parking occupancy model created according to the various embodiments described herein. The service platform 119, services 121, and/or content providers 123 may provide mapping, navigation, and/or other location based services to the vehicle 109 and/or UE 113.

By way of example, the UE 113 may be any mobile computer including, but not limited to, an in-vehicle navigation system, vehicle telemetry device or sensor, a personal navigation device ("PND"), a portable navigation device, a cellular telephone, a mobile phone, a personal digital assistant ("PDA"), a wearable device, a camera, a computer and/or other device that can perform navigation or location based functions, i.e., digital routing and map display. In some embodiments, it is contemplated that mobile computer can refer to a combination of devices such as a cellular telephone that is interfaced with an on-board navigation system of an autonomous vehicle or physically connected to the vehicle for serving as the navigation system.

By way of example, the mapping platform 111 may be implemented as a cloud based service, hosted solution or the like for performing the above described functions. Alternatively, the mapping platform 111 may be directly integrated for processing data generated and/or provided by the service platform 119, services 121, content providers 123, and/or applications 117. Per this integration, the mapping platform 111 may perform client-side parking occupancy model building based on historical parking occupancy data.

By way of example, the communication network 125 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

By way of example, the mapping platform 111 communicates with other components of the system 100 using well known, new or still developing protocols. In this context, a protocol includes a set of rules defining how the network nodes within the communication network 125 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defmed by the OSI Reference Model.

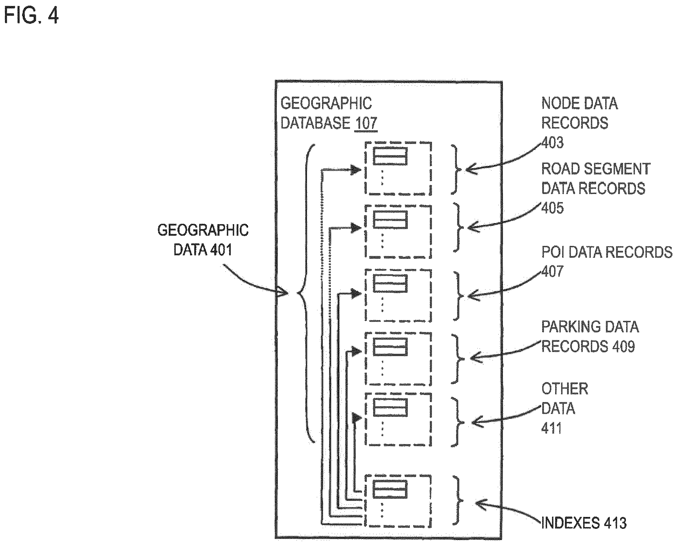

FIG. 4 is a diagram of the geographic database 107, according to one embodiment. In one embodiment, parking occupancy data, parking availability information, and/or any other information used or generated by the system 100 with respect to building parking occupancy models can be stored, associated with, and/or linked to the geographic database 107 or data thereof. In one embodiment, the geographic or map database 107 includes geographic data 401 used for (or configured to be compiled to be used for) mapping and/or navigation-related services, such as for route information, service information, estimated time of arrival information, location sharing information, speed sharing information, and/or geospatial information sharing, according to exemplary embodiments. For example, the geographic database 107 includes node data records 403, road segment or link data records 405, POI data records 407, parking data records 409, other data records 411, and indexes 413, for example. More, fewer or different data records can be provided.

In one embodiment, these records store one or more of the classification features used for building a parking occupancy model according to the various embodiments described herein. As described above, the features include, but are not limited to: (1) functional class of the link (e.g., principal arterial roadways, minor arterial roadways, collector roadways, local roadways, etc.) ; (2) POI density along a link (e.g., how many POIs are located along the link); (3) night life POI density along a link (e.g., how many POIs classified related to night life are along the link, such as restaurants, bars, clubs, etc.); (4) POI types along a link (e.g., what other types of POIs are located along the link); (5) population density along a link (e.g., the population of people living or working areas around the link); (6) road density along a link (e.g., how many roads are within a threshold distance of the link); (7) zoning (e.g., CBD, residential, etc.); (8) time epoch (e.g., segmentation by a defined period of time such as 15 mins, 1 hour, etc. periods of time); (9) weekday/weekend; (10) bi-directionality (e.g., whether traffic flows in two or multiple directions along the link); and (11) accessibility to public transit (e.g., proximity to subways, buses, transit stations, etc.).

In one embodiment, the other data records 411 include cartographic ("carto") data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GPS data associations (such as using known or future map matching or geo-coding techniques), for example.

In one embodiment, the indexes 413 may improve the speed of data retrieval operations in the geographic database 107. In one embodiment, the indexes 413 may be used to quickly locate data without having to search every row in the geographic database 107 every time it is accessed.

In exemplary embodiments, the road segment data records 405 are links or segments representing roads, streets, or paths, as can be used in the calculated route or recorded route information. The node data records 403 are end points corresponding to the respective links or segments of the road segment data records 405. The road link data records 405 and the node data records 403 represent a road network, such as used by vehicles, cars, and/or other entities. Alternatively, the geographic database 107 can contain path segment and node data records or other data that represent pedestrian paths or areas in addition to or instead of the vehicle road record data, for example.

The road link and nodes can be associated with attributes, such as geographic coordinates, street names, address ranges, speed limits, turn restrictions at intersections, and other navigation related attributes, as well as POIs, such as traffic controls (e.g., stoplights, stop signs, crossings, etc.), gasoline stations, hotels, restaurants, museums, stadiums, offices, automobile dealerships, auto repair shops, buildings, stores, parks, etc. The geographic database 107 can include data about the POIs and their respective locations in the POI data records 407. The geographic database 107 can also include data about places, such as cities, towns, or other communities, and other geographic features, such as bodies of water, mountain ranges, etc. Such place or feature data can be part of the POI data 407 or can be associated with POIs or POI data records 407 (such as a data point used for displaying or representing a position of a city).

In one embodiment, the parking availability data records 409 can include any data item used by the parking platform 111 including, but not limited to historical or predicted parking occupancy data, link categories or clusters, parking occupancy patterns or templates associated with the clusters or link categories, parking availability information, parking duration model data, parking data, estimated waiting times to park for parking areas of interest, travel segments within the parking areas to monitor, number of spaces, parking search behaviors, probe or trajectory data, travel profile information, user preferences, and/or the like.

The geographic database 107 can be maintained by the content provider in association with the service platform 119 (e.g., a map developer). The map developer can collect geographic data 401 to generate and enhance the geographic database 107. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database 107 can be a master geographic database stored in a format that facilitates updating, maintenance, and development. For example, the master geographic database 107 or data 401 in the master geographic database 107 can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems (e.g., associated with the vehicles 109 and/or UE 113).

For example, geographic data 401 or geospatial information is compiled (such as into a platform specification format (PSF) format) to organize and/or configure the data for performing map or navigation-related functions and/or services, such as map annotation, route calculation, route guidance, map display, speed calculation, distance and travel time functions, and other functions, by a navigation device, such as by a vehicle 109 and/or UE 113 (e.g., via a navigation application 117), for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

As mentioned above, the geographic database 107 can be a master geographic database, but in alternate embodiments, the geographic database 107 can represent a compiled navigation database that can be used in or with end user devices (e.g., the vehicles 109 and/or UEs 113) to provide navigation-related functions including estimations of parking availability and waiting times to park in various parking areas. For example, the geographic database 107 can be used with the end user device (e.g., vehicle 109 and/or UE 113) to provide an end user with navigation features. In such a case, the geographic database 107 and/or its related parking data/information can be downloaded or stored on the end user device, or the end user device can access the geographic database 107 through a wireless or wired connection (such as via a server and/or the communication network 125), for example.

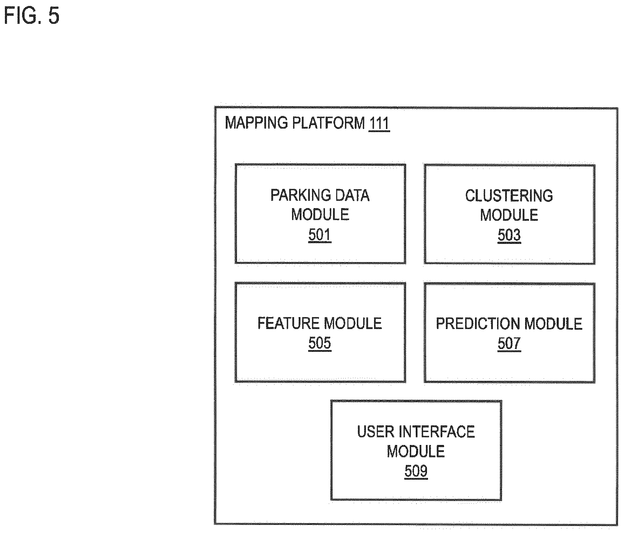

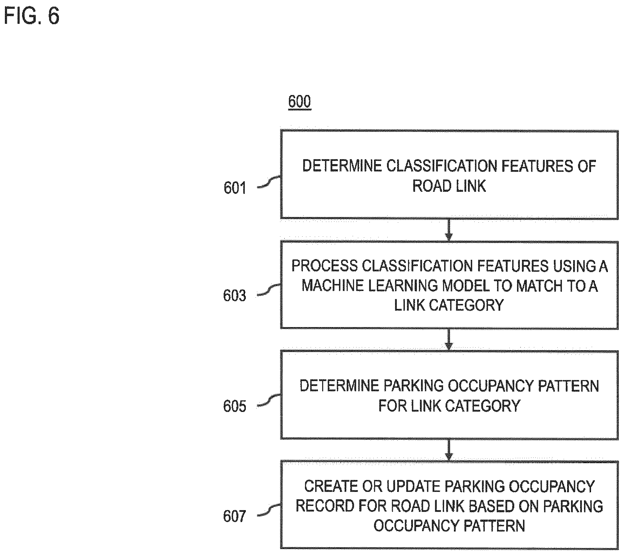

FIG. 5 is a diagram of the components of a parking platform 111, according to one embodiment. By way of example, the parking platform 111 includes one or more components for providing an estimated waiting time to park according to the various embodiments described herein. It is contemplated that the functions of these components may be combined or performed by other components of equivalent functionality. In this embodiment, the parking platform 111 includes a parking data module 501, a clustering module 503, a feature module 505, a prediction module 507, and a user interface (UI) module 509. The above presented modules and components of the parking platform 111 can be implemented in hardware, firmware, software, or a combination thereof. Though depicted as a separate entity in FIG. 1, it is contemplated that the parking platform 111 may be implemented as a module of any of the components of the system 100 (e.g., a component of the vehicle 109, navigation system of the vehicle 109, UE 113, and/or application 117). In another embodiment, one or more of the modules 501-509 may be implemented as a cloud based service, local service, native application, or combination thereof. The functions of these modules are discussed with respect to FIGs. 6-8 below.

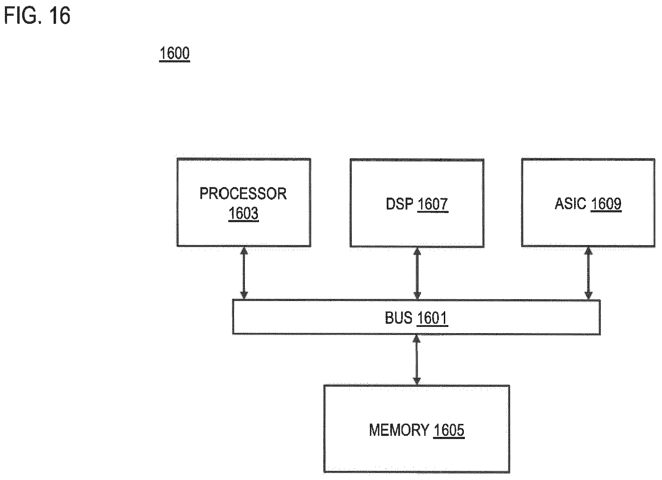

FIG. 6 is a flowchart of a process for creating or updating parking occupancy data from a parking occupancy model, according to one embodiment. In various embodiments, the parking platform 111 and/or any of the modules 501-509 of the parking platform 111 as shown in FIG. 5 may perform one or more portions of the process 600 and may be implemented in, for instance, a chip set including a processor and a memory as shown in FIG. 16. As such, the parking platform 111 and/or any of the modules 501-509 can provide means for accomplishing various parts of the process 600, as well as means for accomplishing embodiments of other processes described herein in conjunction with other components of the system 100. Although the process 600 is illustrated and described as a sequence of steps, its contemplated that various embodiments of the process 600 may be performed in any order or combination and need not include all of the illustrated steps.

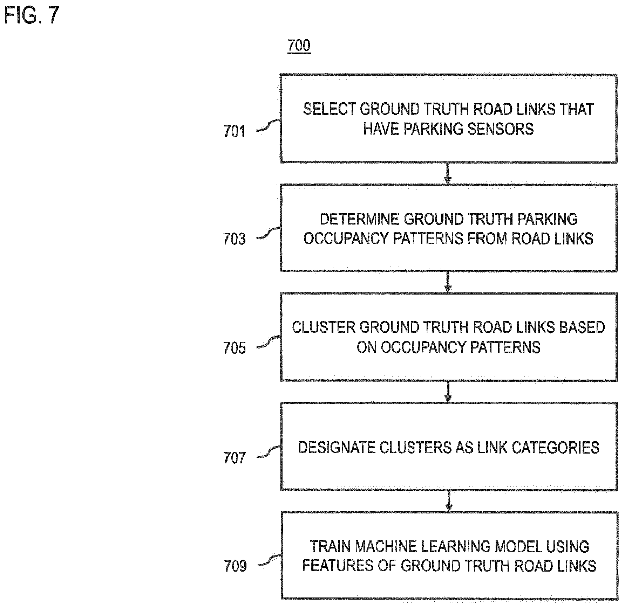

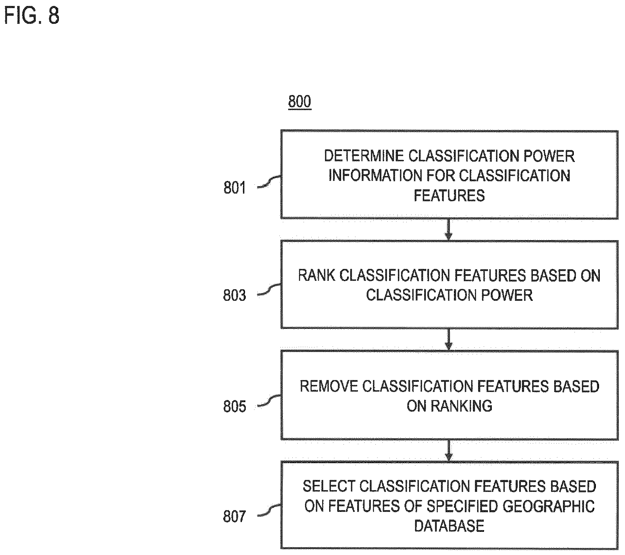

The process 600 describes an example approach for predicting parking occupancy data for a road link of interest using a previously trained or created parking occupancy model. In this example, the parking occupancy model is a machine learning model that has been trained according to the embodiments described above. The training process is also described in the process 700 of FIG. 7 and the process 800 of FIG. 8 below. In one embodiment, the process 600 is initiated, for instance, to create or update a parking occupancy data record for the road link in the geographic database 107. In addition or alternatively, the process 600 can be initiated to determine parking occupancy data for a road link in response to a request for navigation services (e.g., parking aware routing), mapping services (e.g., presenting a mapping user interface with parking occupancy data for each link), and/or other services (e.g., services 121) for which parking occupancy data is processed, used, and/or presented to an end user.

In step 601, to begin the parking occupancy data prediction process, the feature module 505 determines one or more classification features of a road link, street segment, or parking facility of interest. In one embodiment, the classification features are those features that have been engineered or selected to train or create the parking occupancy model that is being used by the parking platform 111 to make the parking occupancy data prediction. The classification features can include any feature of the road link, surrounding area, parking spaces 105 along the road link, vehicles 109 parking the parking spaces 105, etc. that may contribute to parking occupancy behavior. Examples of classification features include POI types, POI density, census data (e.g., population, demographics, etc.), transit accessibility, district type (e.g., CBD, residential), functional class, bi-directionality, etc.

In step 603, the prediction module 507 processes the one or more classification features using the machine learning model to match the road link to a link category. In one embodiment, a link category corresponds to a clustered set of ground truth road links that have been clustered based on their respective parking occupancy patterns. Accordingly, matching the road link of interest to the link category, comprises matching the classification features of the road link of interest to the features extracted from the ground truth road links in clustered to create the link category. The matching link category is then the category whose features most closely match the features of the road link of interest (e.g. matches with a highest probability), using a matching algorithm of the machine learning model.

In step 605, the prediction module 507 determines a parking occupancy pattern for the road link based on the link category. In one embodiment, the parking occupancy pattern is determined from a parking occupancy template associated with the link category. As described above, a link category is created by clustering ground truth data according to similarity of observed parking occupancy patterns. In one embodiment, the parking occupancy template is a generated during the model building process to represent the parking occupancy patterns of the ground truth road links in each link category or cluster.

In another embodiment, in addition to or instead of matching to the link category as described above, the prediction module 507 queries a features database (e.g., a database of features extracted from ground truth road links for which ground truth parking occupancy patterns or data are available) for one or more other road links (e.g., ground truth road links) whose stored classification features match the one or more classification features of the road link within threshold criteria. The parking occupancy pattern of the road link of interest is then determined from one or more stored parking occupancy patterns corresponding to the one or more other road links to which the road link of interest is matched.

In one embodiment, the prediction module 507 can also use the machine learning model to classify a probability of parking availability for the road link in addition to or in place of outputting the matched parking occupancy pattern. The probability of parking availability represents the machine learning model's calculated probability that parking is available on the road link of interest at a given time (or time epoch) based on the classification features of the road link. In one embodiment, the prediction module 507 then convert the probability to a classification label of either "parking is available" or "parking is not available" using a parking availability threshold. In other words, the prediction module 507 can determine whether parking is available on the road link by comparing the predicted probability of parking availability to a parking availability threshold. The parking availability threshold is a probability value (e.g., 0.1 cut, a 0.2 cut, a 0.3 cut, a 0.4 cut, etc.) that can be used to cut or segment the parking availability probability range into ranges corresponding to the parking availability classification labels. For example, the prediction module 507 may determine that parking is not available on the road link when the probability of parking availability is less than the parking availability threshold, and determine that parking is available on the road link when the probability of parking availability is greater than the parking availability threshold.

In one embodiment, the parking availability threshold is determined by varying one or more candidate parking availability thresholds to maximize a classification accuracy of the machine learning model with respect to ground truth data. Classification accuracy, for instance, can be determined for each classification category (e.g., "parking available" and "parking unavailable") with respect to true positives, false positives, true negatives, false negatives, precision, recall, F-measure, receiving operating characteristic (ROC) area under the curve and/or other accuracy metrics for each of the varied candidate parking availability thresholds. For example, the prediction module 207 can specify a parking availability threshold that maximizes the true positive and/or true negative rates, while minimizing the false positives and/or false negative rates. In other words, the prediction module 507 can designate the varied one or more candidate parking availability thresholds corresponding to a maximum classification accuracy as the parking availability threshold.

In step 605, the prediction module 507 creates or updates a parking occupancy record of a geographic record corresponding to road link using the predicted parking occupancy pattern and/or the parking availability classification. In addition or alternatively, the predicted parking occupancy pattern and/or the parking availability classification can be used by one or more services (e.g., navigation services, mapping services, etc.) to present a user interface presenting the predicted parking occupancy data.

FIG. 7 is a flowchart of a process for training a parking occupancy model, according to one embodiment. In various embodiments, the parking platform 111 and/or any of the modules 501-509 of the parking platform 111 as shown in FIG. 5 may perform one or more portions of the process 700 and may be implemented in, for instance, a chip set including a processor and a memory as shown in FIG. 16. As such, the parking platform 111 and/or any of the modules 501-509 can provide means for accomplishing various parts of the process 700, as well as means for accomplishing embodiments of other processes described herein in conjunction with other components of the system 100. Although the process 700 is illustrated and described as a sequence of steps, its contemplated that various embodiments of the process 700 may be performed in any order or combination and need not include all of the illustrated steps.

The process 700 can be used to train a parking occupancy model (e.g., a machine learning model) before the parking platform 111 uses the model to predict parking occupancy data according to the various embodiments described herein (e.g., according to the prediction process 600 of FIG. 6).

In step 701, the parking data module 501 selects a plurality of ground truth road links that are configured with parking sensors for training the machine learning model (e.g., a parking occupancy model). In other words, the parking data module 501 gathers historical parking occupancy data from road links, cities, etc. that are generated using a means that provide a predetermined level of accuracy or quality. As discussed above, data generated by parking sensors 103 (e.g., in-ground parking sensors or equivalent) generally provide the level of accuracy with respect to sensing parking events (e.g., park-in and park-out events) that meets the level of accuracy configured for the parking platform 111. It is noted, however, that parking sensors 103 need not be the only means to achieve a desired level of accuracy. For example, in some cases, parking events detected from probe data or location traces reported by vehicles 109 can provide a desired accuracy (e.g., when such location traces are measured with sufficient accuracy to correlate parking events to specific parking spaces 105 and/or parking areas 101.

In step 703, the parking data module 501 processes parking occupancy data from the parking sensors to determine ground truth parking occupancy patterns for the plurality of ground truth road links. To generate the ground truth parking occupancy patterns, the parking data module 501 process the parking events data collected from the ground truth links to determine the number of available parking spaces in each ground truth link, and then plot the number of those spaces that are occupied over a period of time (e.g., over a 24-hour period). Examples of such parking occupancy patterns are illustrated and described with respect to FIGs. 2B-2D above.

In step 705, the clustering module 503 clusters the plurality of ground truth road links into clusters based on the ground truth parking occupancy patterns. In other words, the clustering module 503 can use a machine learning clustering algorithm such as dynamic time warping (DTW) or equivalent to determine which ground truth road links have similar parking occupancy patterns. By way of example, DTW is an algorithm that can match to temporal sequences (e.g., temporal sequence of parking occupancy data comprising the parking occupancy pattern) by "warping" or using a non-linear matching of the individual data points of the two temporal sequences. The road links with parking occupancy patterns that are designated as similar under the clustering or to within a threshold similarity are grouped into a cluster.

In one embodiment, for each cluster, the clustering module 503 can create a parking occupancy template that represents the parking occupancy patterns of each of the ground truth road links grouped into the cluster. In other words, the parking occupancy template is a parking occupancy pattern that is used to represent the cluster of ground truth road links as a whole. The clustering module 503 can use any process or means to generate the parking occupancy template from the observed parking occupancy patterns in each cluster including, but not limited to, average the observed patterns, selecting a most commonly occurring pattern, etc.

After generating the parking occupancy template for each cluster, the clustering module 503 can also determine the classification features for each of the ground truth links in each cluster. The clustering module 503 can then determine a representative set of the features for the cluster as a whole from the features extracted for each individual road link in the cluster. In this way, each cluster has at least a parking occupancy template and a representative set of classification features against other road links can be matched or classified.

In step 707, the clustering module 503 designates the resulting clusters of ground truth road links as a plurality of link categories. In other words, the clusters or link categories are representative of different types of road links that can exhibit corresponding different parking occupancy patterns.

Accordingly, in step 709, the feature module 505 trains a machine learning model using the features of the ground truth road links. Accordingly, a trained parking occupancy model or machine learning model can correlate or match classification features to specific parking patterns to make predictions of parking occupancy data for new links.

FIG. 8 is a flowchart of a process for selecting classification features for building a parking occupancy mode, according to one embodiment. In various embodiments, the parking platform 111 and/or any of the modules 501-509 of the parking platform 111 as shown in FIG. 5 may perform one or more portions of the process 800 and may be implemented in, for instance, a chip set including a processor and a memory as shown in FIG. 16. As such, the parking platform 111 and/or any of the modules 501-509 can provide means for accomplishing various parts of the process 800, as well as means for accomplishing embodiments of other processes described herein in conjunction with other components of the system 100. Although the process 800 is illustrated and described as a sequence of steps, its contemplated that various embodiments of the process 800 may be performed in any order or combination and need not include all of the illustrated steps.

In one embodiment, the process 800 can be performed in combination with the process 700 of FIG. 7 to build a parking occupancy model. More specifically, the process 800 is a process for performing feature engineering or selection to arrive at a set of classification features to be used for training the parking occupancy model and subsequent prediction of parking occupancy data for new links or street segments.

In step 801, the feature module 505 determines classification power information for one or more classification features that can be used to train the machine learning model. By way of example, classification power refers to a contribution or correlation between a feature and the resulting classification generated by the parking platform 111. In one embodiment, classification power can be computed using an information gain algorithm, a OneR Attribute evaluation, and/or equivalent.

In step 803, the feature module 505 ranks the one or more classification features based on classification power information. Table 1 below illustrates a classification power ranking of features using the information gain algorithm, and Table 2 illustrates a classification power ranking of features using the OneR Attribute evaluation.

**Table 1**

| **Information Gain Algorithm** | |
|---|---|
| **Feature** | **Average Merit (Classification Power)** |
| Epoch | 0.128 ± 0 |
| Road Density | 0.08 ± 0.001 |
| POI Density | 0.08 ± 0 |
| Night Life Density | 0.052 ± 0.00 |
| Population Density | 0.043 ± 0 |
| Zoning | 0.03 ± 0 |
| Bi-Directional/One-Way | 0.008 ± 0 |
| Functional Class | 0.003 ± 0 |
| Weekend/Weekday | 0 ± 0 |

**Table 2**

| **OneR Attribute Evaluation** | |
|---|---|
| **Feature** | **Average Merit (Classification Power)** |
| Epoch | 67.919 ± 0.029 |
| Road Density | 63.757 ± 0.076 |
| POI Density | 63.757 ± 0.076 |
| Night Life Density | 61.33 ± 0.051 |
| Population Density | 60.762 ± 0.071 |
| Zoning | 58.385 ± 0.055 |
| Bi-Directional/One-Way | 53.83 ± 0 |
| Functional Class | 53.83 ± 0 |
| Weekend/Weekday | 53.83 ± 0 |

In step 805, the feature module 505 removes at least one classification from among the one or more classification features based on the ranking. For example, the feature module 505 can remove the features with the least amount of classification power or classification power below a threshold value.

In step 807, the feature module 505 can also select the one or more classification features to build the parking occupancy model based on whether the one or more classification features are available in a specified geographic database. In other words, the feature module 505 can remove features whose values are not stored in the geographic database 107, or add feature that are available in the geographic database 107. In one embodiment, the feature module 505 can perform steps 805 and 807 in combination so that, for instance, the least ranked feature that is not available in the geographic database 107 can be removed.

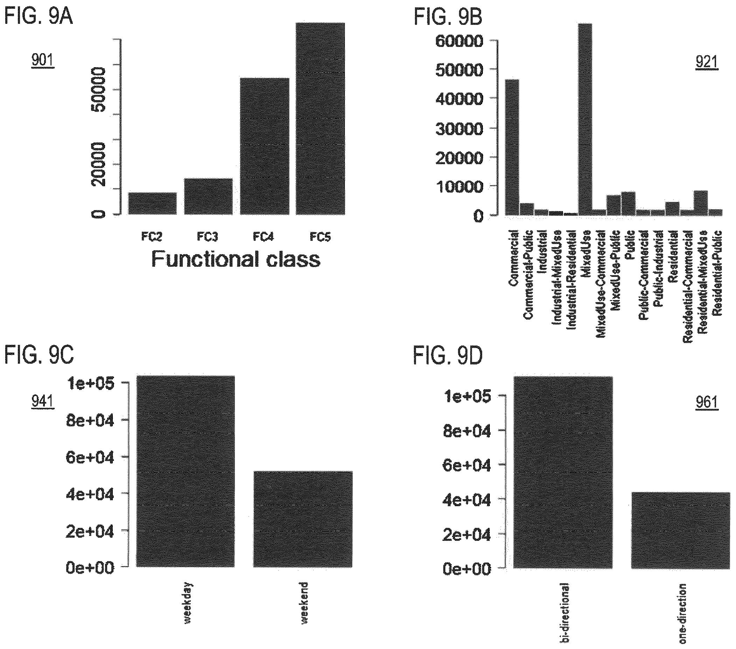

FIGs. 9A-9D are diagrams of histograms for example classification features, according to one embodiment. As shown, the histograms 901, 921, 941, and 961 of the respective FIGs. 9A-9D depict the frequency or number of occurrences of data records in the geographic database 107 for each example classification feature. In other words, the frequency indicates how many links in the geographic database 107 have values defined or specified for a given classification feature. In addition, the histograms 901. 921, 941, and 961 show the frequency of individual labels or values of each classification feature. For example, FIG. 9A illustrates a histogram 901 of the frequency of data records for a functional class feature of a road link. In this example, functional class 5 occurs most frequently. FIG. 9B illustrates the frequency of data records for a zoning type feature of each link, with mixed-use links occurring most frequency. FIG. 9C illustrates the frequency of data records for a weekday/weekend feature of each link, with weekday link records occurring most frequently. FIG. 9D illustrates the frequency of data records for a bi-directionality/one-direction feature of each link, with bidirectional link records occurring most frequently. In one embodiment, the parking platform 111 can determine which classification features to use to build the parking occupancy. For example, features that have a sufficient number of records (e.g., above a threshold criterion) or have an occurrence in the data records can be selected.

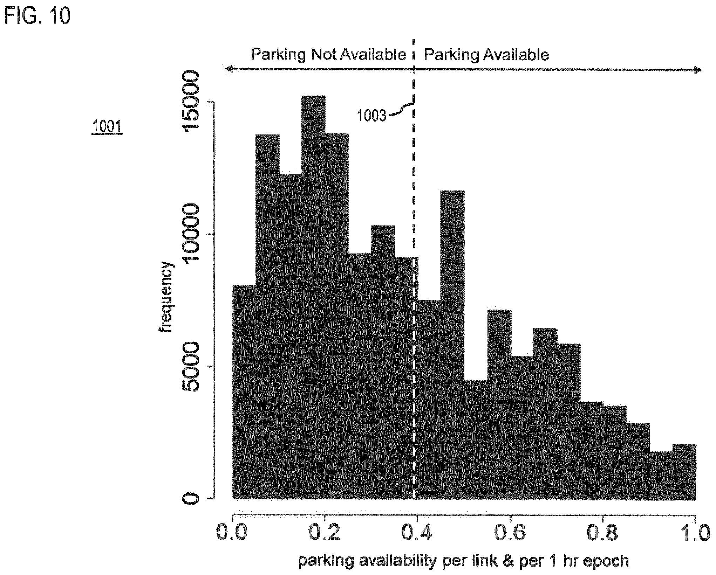

FIG. 10 is a diagram of a histogram of parking availability/occupancy per road link per one-hour epoch, according to one embodiment. In one embodiment, the parking platform 111 can use the parking occupancy model to predict a probability of parking availability or occupancy for a particular link. This parking availability probability, for instance, is expressed as a range from 0 (e.g., indicating parking is not available) to 1 (e.g., indicating parking is available), which other probabilities falling within this range. The histogram 1001 of FIG. 10 illustrates the frequencies of occurrence of different probabilities calculated for an example set of links. In this example, the parking availability is determined per link per 1 hour time epoch. As previously discussed, to convert the probabilities into a categorical label representing parking availability (e.g., two categories of either "parking available" or "parking not available), the parking platform 111 can specify one or more "cuts" or parking availability thresholds where probabilities falling below a cut 1003 are labeled as "parking not available" and probabilities falling above the cut 1003 are labeled as "parking available."

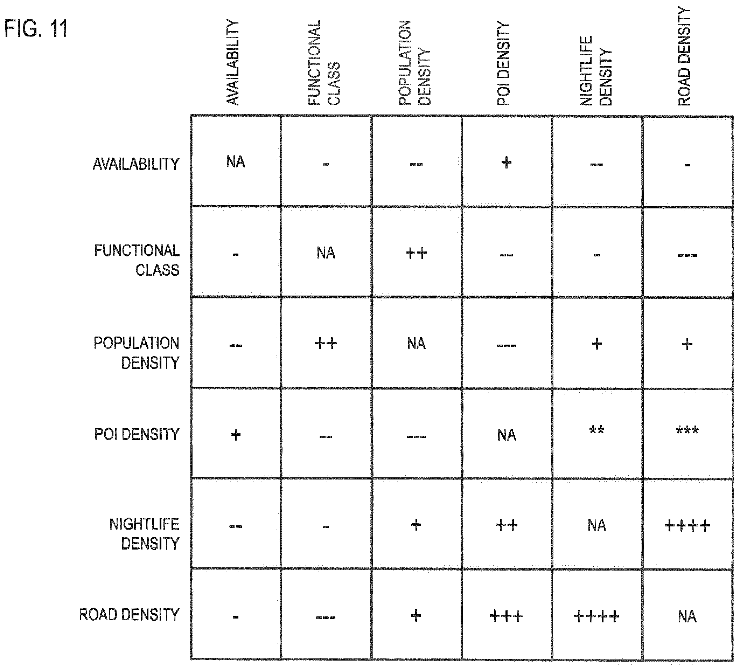

FIG. 11 is a diagram depicting correlations among example classification features, according to one embodiment. In one embodiment, each of classification features can have different correlations to predicting parking availability/occupancy as well as to other classification features. The correlation chart 1101 depicts the correlations among the classification features (e.g., functional class, population density, POI density, nightlife density, road density, etc.), as well as to parking availability. Positive correlations are indicated by "+" and negative correlations are indicated by "-", with the number of each symbol indicating a magnitude of the correlation. By way of example, a positive correlation indicates that a pair of features affects the prediction of parking availability in the same direction (e.g., each feature leads to predicting the same parking classification output), and a negative correlation indicates that the pair of features affects the prediction of parking availability in opposite directions (e.g., each feature leads to predicting the opposite parking classification output). In one embodiment, the parking platform 111 can select which classification features to use to build a parking occupancy model based on the correlations. For example, if a pair of classification features have a highly positive correlation (e.g., above a correlation threshold), the parking platform 111 can potentially remove one of the features without affective overall prediction accuracy.

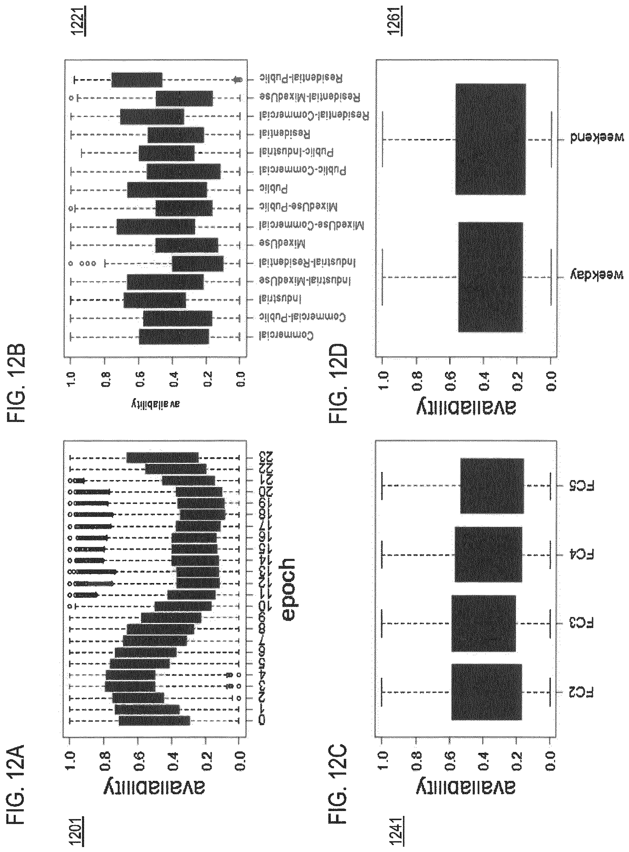

FIGs. 12A-12D are diagrams depicting parking availability/occupancy with respect to example individual classification features for example road links, according to one embodiment. In the example of FIGs. 12A-12D, the parking platform 111 has used a trained parking occupancy model to predict parking availability for the example road links. The graphs 1201, 1221, 1241, and 1261 respectively of FIGs. 12A-12D graph the predicted parking availability against individual classification features used to make the prediction. Graph 1201 of FIG. 12A depicts parking availability against 1 hour time epochs. In this example, the parking available probabilities increase for late evening to early morning hours with availability decreasing during daytime hours. Graph 1221 of FIG. 2B depicts parking availability against zoning types. In this example, the parking availability varies with the different zoning types. Graph 1241 of FIG. 12C depicts parking availability against functional class of a road link (e.g., function classes 1-5). In this example, parking availability appears relatively consistent across functional classes for the group of road links analyzed. Graph 1261 of FIG. 12D depicts parking availability for weekend versus weekend. In this example, the parking availability appears relatively consistent between weekdays and the weekend. In one embodiment, the parking platform 111 can use this analysis of parking availability versus classification feature value to perform feature engineering or selection.

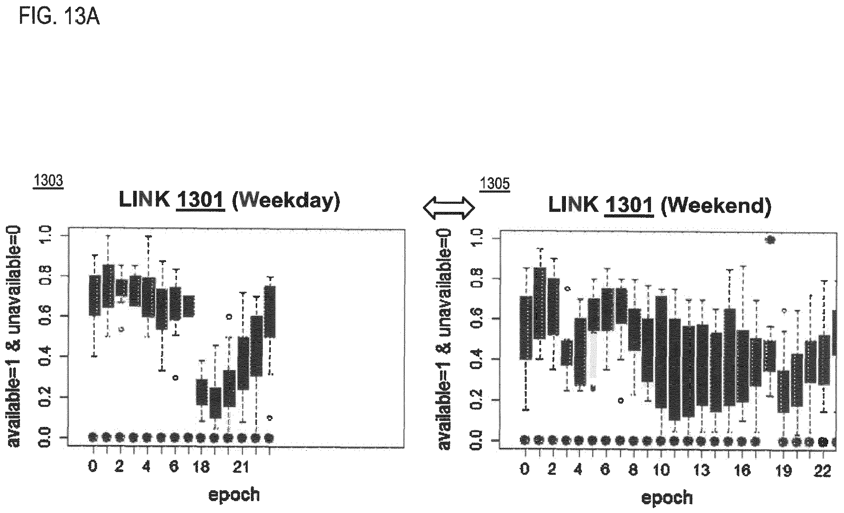

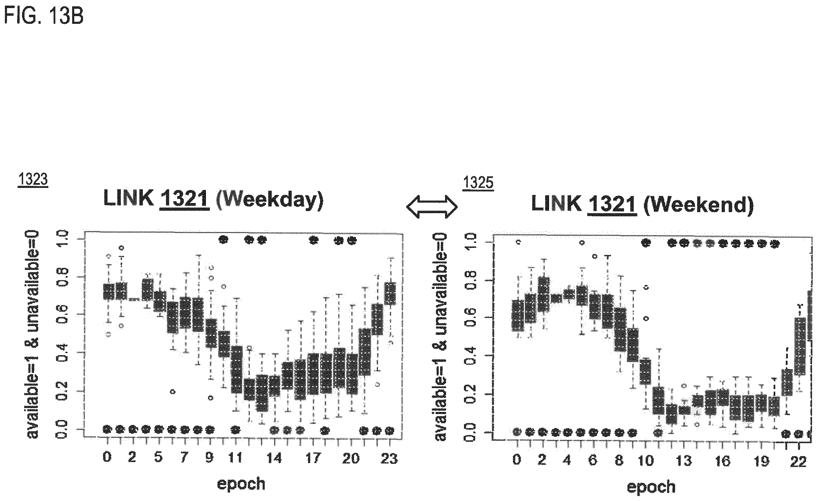

FIGs. 13A and 13B depict example parking availability/occupancy data for example links with example classification features, according to one embodiment. In the example of FIG. 13A, a link 1301 was found to have high nightlife density as a feature. The POI density of link 1301 is also very high as the link 1301 is located between several skyscraper buildings. Based on these features and other features, the parking platform 111 uses a trained parking occupancy model to predict parking availability for the link 1301 for weekdays as shown in graph 1303 and for weekends as shown in graph 1305. The graphs 1303 and 1305 illustrate the predicted probability of parking versus time epochs, with the predicted probabilities indicated by the bars. The graphs 1303 and 1305 also illustrate the ground truth parking availability as dots, where dots at parking probability of 0 indicate that parking was observed to not be available at a particular time epoch, and where dots at parking probability of 1 indicate that parking was observed to be available. In one embodiment, the parking platform 111 can configure a parking availability threshold probability that can be applied to the predicted probabilities to result in a parking availability classification label corresponding to the ground truth data.

In the example of FIG. 13B, a link 1321 was found to have high nightlife density as a feature. However, the link 1321 is close to two large parking garages that can potentially reduce the demand for on-street parking. Accordingly, in one embodiment, the parking platform 111 can use the presence or proximity of parking garages or other off-street parking facilities as a feature to be able to distinguish between on-street versus off-street parking. Alternatively, if no such distinction is desired, the parking platform 111 can exclude the feature of nearby off-street parking facilities so that the parking occupancy model can be generalized to all parking facilities regardless of whether the facility is on-street parking on a road link or parking in garages, lots, etc. As with the example of FIG. 13A, the parking platform 111 predicts the parking availability probabilities for the link 1321 based on its features for both weekdays as shown in graph 1323 and for weekends as shown in graph 1325.

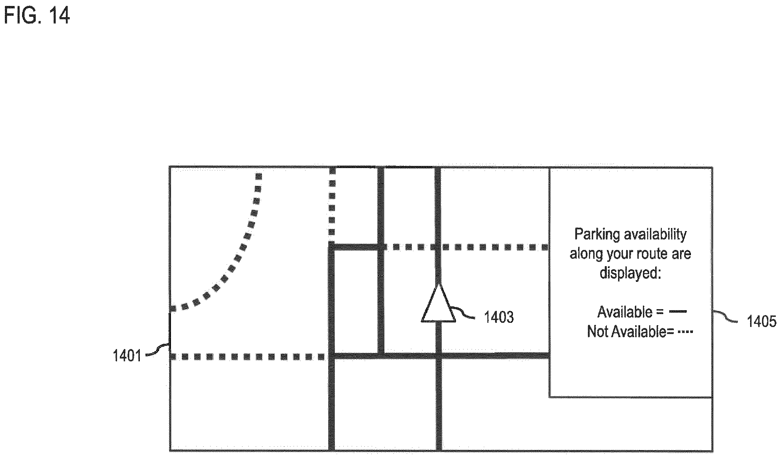

FIG. 14 is a diagram of an example navigation user interface presenting parking occupancy data generated using a parking occupancy model, according to one embodiment. As shown, a UI 1401 depicts a navigation user interface (e.g., presented on vehicle 109 and/or UE 113) for a user traveling in a road network. The UI 1401 presents a representation of a current user position 1403 overlaid on a map display of the road network. As indicated in window 1405, the map display presents representations of parking occupancy data (e.g., parking availability) with respect to road links of the road network. In one embodiment, as the vehicle 109 travels, the parking platform 111 can use a trained parking occupancy model to predict parking availability information for the road links within a predetermined proximity of the vehicle 109. For example, the parking platform 111 can determine the classification features of the road links to predict parking availability according to the various embodiments described herein. As shown in the UI 1401, road links with legal parking is indicated by a solid line, and road links on which parking is illegal is indicated with a dotted line.

The processes described herein for building a parking occupancy model may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

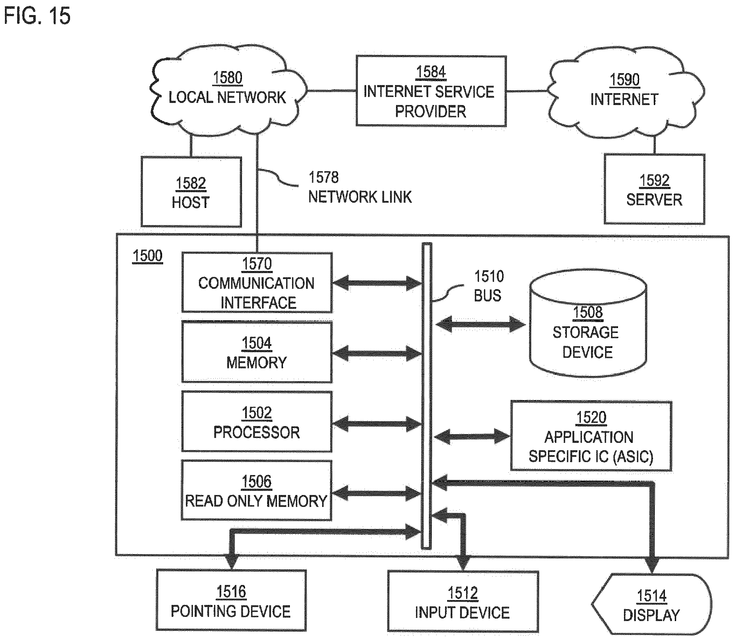

FIG. 15 illustrates a computer system 1500 upon which an embodiment of the invention may be implemented. Computer system 1500 is programmed (e.g., via computer program code or instructions) to build a parking occupancy model as described herein and includes a communication mechanism such as a bus 1510 for passing information between other internal and external components of the computer system 1500. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1510 includes one or more parallel conductors of information so that information is transferred quickly among devices coupled to the bus 1510. One or more processors 1502 for processing information are coupled with the bus 1510.

A processor 1502 performs a set of operations on information as specified by computer program code related to building a parking occupancy model. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1510 and placing information on the bus 1510. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1502, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1500 also includes a memory 1504 coupled to bus 1510. The memory 1504, such as a random access memory (RAM) or other dynamic storage device, stores information including processor instructions for building a parking occupancy model. Dynamic memory allows information stored therein to be changed by the computer system 1500. RAM allows a unit of information stored at a location called a memory address to be stored and retrieved independently of information at neighboring addresses. The memory 1504 is also used by the processor 1502 to store temporary values during execution of processor instructions. The computer system 1500 also includes a read only memory (ROM) 1506 or other static storage device coupled to the bus 1510 for storing static information, including instructions, that is not changed by the computer system 1500. Some memory is composed of volatile storage that loses the information stored thereon when power is lost. Also coupled to bus 1510 is a non-volatile (persistent) storage device 1508, such as a magnetic disk, optical disk or flash card, for storing information, including instructions, that persists even when the computer system 1500 is turned off or otherwise loses power.

Information, including instructions for building a parking occupancy model, is provided to the bus 1510 for use by the processor from an external input device 1512, such as a keyboard containing alphanumeric keys operated by a human user, or a sensor. A sensor detects conditions in its vicinity and transforms those detections into physical expression compatible with the measurable phenomenon used to represent information in computer system 1500. Other external devices coupled to bus 1510, used primarily for interacting with humans, include a display device 1514, such as a cathode ray tube (CRT) or a liquid crystal display (LCD), or plasma screen or printer for presenting text or images, and a pointing device 1516, such as a mouse or a trackball or cursor direction keys, or motion sensor, for controlling a position of a small cursor image presented on the display 1514 and issuing commands associated with graphical elements presented on the display 1514. In some embodiments, for example, in embodiments in which the computer system 1500 performs all functions automatically without human input, one or more of external input device 1512, display device 1514 and pointing device 1516 is omitted.

In the illustrated embodiment, special purpose hardware, such as an application specific integrated circuit (ASIC) 1520, is coupled to bus 1510. The special purpose hardware is configured to perform operations not performed by processor 1502 quickly enough for special purposes. Examples of application specific ICs include graphics accelerator cards for generating images for display 1514, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1500 also includes one or more instances of a communications interface 1570 coupled to bus 1510. Communication interface 1570 provides a one-way or two-way communication coupling to a variety of external devices that operate with their own processors, such as printers, scanners and external disks. In general the coupling is with a network link 1578 that is connected to a local network 1580 to which a variety of external devices with their own processors are connected. For example, communication interface 1570 may be a parallel port or a serial port or a universal serial bus (USB) port on a personal computer. In some embodiments, communications interface 1570 is an integrated services digital network (ISDN) card or a digital subscriber line (DSL) card or a telephone modem that provides an information communication connection to a corresponding type of telephone line. In some embodiments, a communication interface 1570 is a cable modem that converts signals on bus 1510 into signals for a communication connection over a coaxial cable or into optical signals for a communication connection over a fiber optic cable. As another example, communications interface 1570 may be a local area network (LAN) card to provide a data communication connection to a compatible LAN, such as Ethernet. Wireless links may also be implemented. For wireless links, the communications interface 1570 sends or receives or both sends and receives electrical, acoustic or electromagnetic signals, including infrared and optical signals, that carry information streams, such as digital data. For example, in wireless handheld devices, such as mobile telephones like cell phones, the communications interface 1570 includes a radio band electromagnetic transmitter and receiver called a radio transceiver. In certain embodiments, the communications interface 1570 enables connection to the communication network 125 for building a parking occupancy model.

The term computer-readable medium is used herein to refer to any medium that participates in providing information to processor 1502, including instructions for execution. Such a medium may take many forms, including, but not limited to, non-volatile media, volatile media and transmission media. Non-volatile media include, for example, optical or magnetic disks, such as storage device 1508. Volatile media include, for example, dynamic memory 1504. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

FIG. 16 illustrates a chip set 1600 upon which an embodiment of the invention may be implemented. Chip set 1600 is programmed to build a parking occupancy model as described herein and includes, for instance, the processor and memory components described with respect to FIG. 15 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1600 includes a communication mechanism such as a bus 1601 for passing information among the components of the chip set 1600. A processor 1603 has connectivity to the bus 1601 to execute instructions and process information stored in, for example, a memory 1605. The processor 1603 may include one or more processing cores with each core configured to perform independently. A multi-core processor enables multiprocessing within a single physical package. Examples of a multi-core processor include two, four, eight, or greater numbers of processing cores. Alternatively or in addition, the processor 1603 may include one or more microprocessors configured in tandem via the bus 1601 to enable independent execution of instructions, pipelining, and multithreading. The processor 1603 may also be accompanied with one or more specialized components to perform certain processing functions and tasks such as one or more digital signal processors (DSP) 1607, or one or more application-specific integrated circuits (ASIC) 1609. A DSP 1607 typically is configured to process real-world signals (e.g., sound) in real time independently of the processor 1603. Similarly, an ASIC 1609 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1603 and accompanying components have connectivity to the memory 1605 via the bus 1601. The memory 1605 includes both dynamic memory (e.g., RAM, magnetic disk, writable optical disk, etc.) and static memory (e.g., ROM, CD-ROM, etc.) for storing executable instructions that when executed perform the inventive steps described herein to build a parking occupancy model. The memory 1605 also stores the data associated with or generated by the execution of the inventive steps.

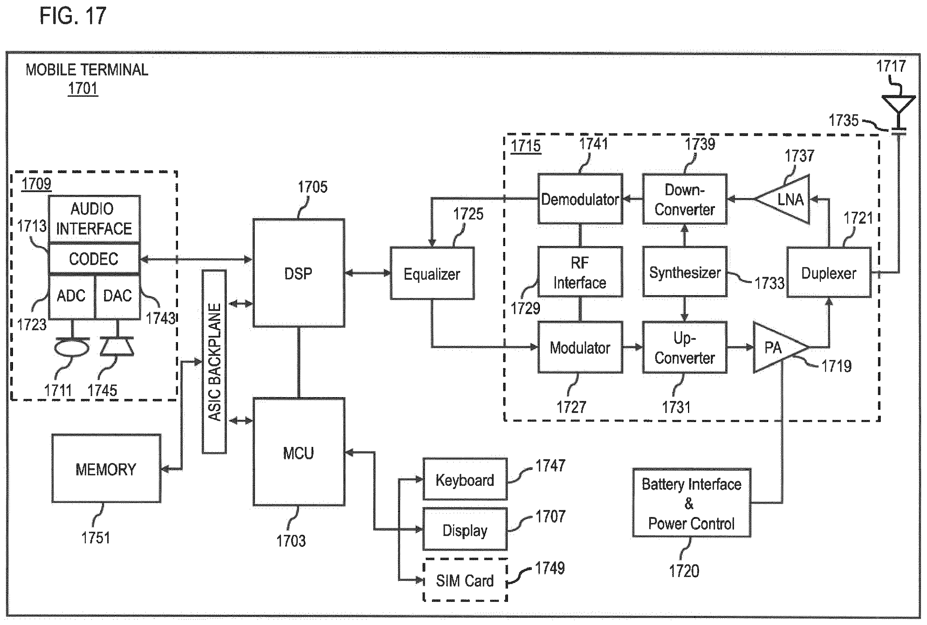

FIG. 17 is a diagram of exemplary components of a mobile station (e.g., handset) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1703, a Digital Signal Processor (DSP) 1705, and a receiver/transmitter unit including a microphone gain control unit and a speaker gain control unit. A main display unit 1707 provides a display to the user in support of various applications and mobile station functions that offer automatic contact matching. An audio function circuitry 1709 includes a microphone 1711 and microphone amplifier that amplifies the speech signal output from the microphone 1711. The amplified speech signal output from the microphone 1711 is fed to a coder/decoder (CODEC) 1713.

A radio section 1715 amplifies power and converts frequency in order to communicate with a base station, which is included in a mobile communication system, via antenna 1717. The power amplifier (PA) 1719 and the transmitter/modulation circuitry are operationally responsive to the MCU 1703, with an output from the PA 1719 coupled to the duplexer 1721 or circulator or antenna switch, as known in the art. The PA 1719 also couples to a battery interface and power control unit 1720.

In use, a user of mobile station 1701 speaks into the microphone 1711 and his or her voice along with any detected background noise is converted into an analog voltage. The analog voltage is then converted into a digital signal through the Analog to Digital Converter (ADC) 1723. The control unit 1703 routes the digital signal into the DSP 1705 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1725 for compensation of any frequency-dependent impairments that occur during transmission though the air such as phase and amplitude distortion. After equalizing the bit stream, the modulator 1727 combines the signal with a RF signal generated in the RF interface 1729. The modulator 1727 generates a sine wave by way of frequency or phase modulation. In order to prepare the signal for transmission, an up-converter 1731 combines the sine wave output from the modulator 1727 with another sine wave generated by a synthesizer 1733 to achieve the desired frequency of transmission. The signal is then sent through a PA 1719 to increase the signal to an appropriate power level. In practical systems, the PA 1719 acts as a variable gain amplifier whose gain is controlled by the DSP 1705 from information received from a network base station. The signal is then filtered within the duplexer 1721 and optionally sent to an antenna coupler 1735 to match impedances to provide maximum power transfer. Finally, the signal is transmitted via antenna 1717 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1701 are received via antenna 1717 and immediately amplified by a low noise amplifier (LNA) 1737. A down-converter 1739 lowers the carrier frequency while the demodulator 1741 strips away the RF leaving only a digital bit stream. The signal then goes through the equalizer 1725 and is processed by the DSP 1705. A Digital to Analog Converter (DAC) 1743 converts the signal and the resulting output is transmitted to the user through the speaker 1745, all under control of a Main Control Unit (MCU) 1703-which can be implemented as a Central Processing Unit (CPU) (not shown).

The MCU 1703 receives various signals including input signals from the keyboard 1747. The keyboard 1747 and/or the MCU 1703 in combination with other user input components (e.g., the microphone 1711) comprise a user interface circuitry for managing user input. The MCU 1703 runs a user interface software to facilitate user control of at least some functions of the mobile station 1701 to build a parking occupancy model. The MCU 1703 also delivers a display command and a switch command to the display 1707 and to the speech output switching controller, respectively. Further, the MCU 1703 exchanges information with the DSP 1705 and can access an optionally incorporated SIM card 1749 and a memory 1751. In addition, the MCU 1703 executes various control functions required of the station. The DSP 1705 may, depending upon the implementation, perform any of a variety of conventional digital processing functions on the voice signals. Additionally, DSP 1705 determines the background noise level of the local environment from the signals detected by microphone 1711 and sets the gain of microphone 1711 to a level selected to compensate for the natural tendency of the user of the mobile station 1701.

The CODEC 1713 includes the ADC 1723 and DAC 1743. The memory 1751 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1751 may be, but not limited to, a single memory, CD, DVD, ROM, RAM, EEPROM, optical storage, or any other non-volatile or non-transitory storage medium capable of storing digital data.

An optionally incorporated SIM card 1749 carries, for instance, important information, such as the cellular phone number, the carrier supplying service, subscription details, and security information. The SIM card 1749 serves primarily to identify the mobile station 1701 on a radio network. The card 1749 also contains a memory for storing a personal telephone number registry, text messages, and user specific mobile station settings.

Furthermore, the following exemplary embodiments of the invention are to be understood to be disclosed:
Embodiment 1: A method for generating parking occupancy data using a machine learning model, comprising:
   - determining one or more classification features of a road link;
   - processing the one or more classification features using the machine learning model to match the road link to a link category;
   - determining a parking occupancy pattern for the road link based on the link category; and
   - creating or updating a parking occupancy record of a geographic record corresponding to road link using the parking occupancy pattern.
Embodiment 2: The method of embodiment 1, wherein the parking occupancy pattern is determined from a parking occupancy template associated with the link category.
Embodiment 3: The method of any of embodiments 1 and 2, further comprising:
   - querying a features database for one or more other road links whose stored classification features match the one or more classification features of the road link within threshold criteria, wherein the parking occupancy pattern is determined from one or more stored parking occupancy patterns corresponding to the one or more other road links.
Embodiment 4: The method of any of embodiments 1 to 3, further comprising:
   - selecting a plurality of ground truth road links that are configured with parking sensors, wherein the machine learning model is trained using ground truth classification features of the plurality of ground truth road links.
Embodiment 5: The method of embodiment 4, further comprising:
   - processing parking occupancy data from the parking sensors to determine ground truth parking occupancy patterns for the plurality of ground truth road links;
   - clustering the plurality of ground truth road links into clusters based on the ground truth parking occupancy patterns; and
   - designating the clusters as a plurality of link categories,
   wherein the link category is matched to the road link from among the plurality of link categories.
Embodiment 6: The method of any of embodiments 1 to 3, wherein the machine learning model further classifies a probability of parking availability for the road link, the method further comprising:
   - determining whether parking is available on the road link by comparing the probability of parking availability to a parking availability threshold,
   wherein said parking is not available on the road link when the probability of parking availability is less than the parking availability threshold; and
   wherein said parking is available on the road link when the probability of parking availability is greater than the parking availability threshold.
Embodiment 7: The method of embodiment 6, wherein the parking availability threshold is determined by varying one or more candidate parking availability thresholds to maximize a classification accuracy of the machine learning model with respect to ground truth data, and designating the varied one or more candidate parking availability thresholds corresponding to a maximum classification accuracy as the parking availability threshold.
Embodiment 8: The method of any of embodiments 1 to 7, further comprising:
   - selecting the one or more classification features based on whether the one or more classification features are available in a specified geographic database.
Embodiment 9: The method of any of embodiments 1 to 8, further comprising:
   - determining classification power information for the one or more classification features of the machine learning model;
   - ranking the one or more classification features based on classification power information; and
   - removing at least one classification from among the one or more classification features based on the ranking.
Embodiment 10: An apparatus for generating parking occupancy data using a machine learning model, comprising:
   - at least one processor; and
   - at least one memory including computer program code for one or more programs, the at least one memory and the computer program code configured to, with the at least one processor, cause the apparatus to perform at least the following,
      - determine one or more classification features of a road link;
      - process the one or more classification features using the machine learning model to match the road link to a link category;
      - determine a parking occupancy pattern for the road link based on the link category; and
      - create or update a parking occupancy record of a geographic record corresponding to road link using the parking occupancy pattern.
Embodiment 11: The apparatus of embodiment 10, wherein the apparatus is further caused to:
   - select a plurality of ground truth road links that are configured with parking sensors, wherein the machine learning model is trained using ground truth classification features of the plurality of ground truth road links.
Embodiment 12: The apparatus of embodiment 11, wherein the apparatus is further caused to:
   - process parking occupancy data from the parking sensors to determine ground truth parking occupancy patterns for the plurality of ground truth road links;
   - cluster the plurality of ground truth road links into clusters based on the ground truth parking occupancy patterns; and
   - designate the clusters as a plurality of link categories,
   wherein the link category is matched to the road link from among the plurality of link categories.
Embodiment 13: The apparatus of any of embodiments 10 to 12, wherein the machine learning model further classifies a probability of parking availability for the road link, and wherein the apparatus is further caused to:
   - determine whether parking is available on the road link by comparing the probability of parking availability to a parking availability threshold,
   wherein said parking is not available on the road link when the probability of parking availability is less than the parking availability threshold; and
   wherein said parking is available on the road link when the probability of parking availability is greater than the parking availability threshold.
Embodiment 14: The apparatus of embodiment 13, wherein the parking availability threshold is determined by varying one or more candidate parking availability thresholds to maximize a classification accuracy of the machine learning model with respect to ground truth data, and designating the varied one or more candidate parking availability thresholds corresponding to a maximum classification accuracy as the parking availability threshold.
Embodiment 15: The apparatus of any of embodiments 10 to 12, wherein the apparatus is further caused to:
   - determine classification power information for the one or more classification features of the machine learning model;
   - rank the one or more classification features based on classification power information; and
   - remove at least one classification from among the one or more classification features based on the ranking.
Embodiment 16: A non-transitory computer-readable storage medium for generating parking occupancy data using a machine learning model, carrying one or more sequences of one or more instructions which, when executed by one or more processors, cause an apparatus to at least perform the following steps:
   - determining one or more classification features of a road link;
   - processing the one or more classification features using the machine learning model to match the road link to a link category;
   - determining a parking occupancy pattern for the road link based on the link category; and
   - creating or updating a parking occupancy record of a geographic record corresponding to road link using the parking occupancy pattern.
Embodiment 17: The non-transitory computer-readable storage medium of embodiment 16, further comprising:
   - selecting a plurality of ground truth road links that are configured with parking sensors,
   wherein the machine learning model is trained using ground truth classification features of the plurality of ground truth road links.
Embodiment 18: The non-transitory computer-readable storage medium of embodiment 17, further comprising:
   - processing parking occupancy data from the parking sensors to determine ground truth parking occupancy patterns for the plurality of ground truth road links;
   - clustering the plurality of ground truth road links into clusters based on the ground truth parking occupancy patterns; and
   - designating the clusters as a plurality of link categories,
   wherein the link category is matched to the road link from among the plurality of link categories.
Embodiment 19: The non-transitory computer-readable storage medium of any of embodiments 16 to 18, wherein the machine learning model further classifies a probability of parking availability for the road link, the method further comprising:
   - determining whether parking is available on the road link by comparing the probability of parking availability to a parking availability threshold,
   wherein said parking is not available on the road link when the probability of parking availability is less than the parking availability threshold; and
   wherein said parking is available on the road link when the probability of parking availability is greater than the parking availability threshold.
Embodiment 20: The non-transitory computer-readable storage medium of any of embodiments 16 to 19, further comprising:
   - selecting the one or more classification features based on whether the one or more classification features are available in a specified geographic database.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method for generating parking occupancy data using a machine learning model, comprising:
determining one or more classification features of a road link;
processing the one or more classification features using the machine learning model to match the road link to a link category;
determining a parking occupancy pattern for the road link based on the link category; and
creating or updating a parking occupancy record of a geographic record corresponding to road link using the parking occupancy pattern.

2. The method of claim 1, wherein the parking occupancy pattern is determined from a parking occupancy template associated with the link category.

3. The method of any of claims 1 and 2, further comprising:
querying a features database for one or more other road links whose stored classification features match the one or more classification features of the road link within threshold criteria,
wherein the parking occupancy pattern is determined from one or more stored parking occupancy patterns corresponding to the one or more other road links.

4. The method of any of claims 1 to 3, further comprising:
selecting a plurality of ground truth road links that are configured with parking sensors,
wherein the machine learning model is trained using ground truth classification features of the plurality of ground truth road links.

5. The method of claim 4, further comprising:
processing parking occupancy data from the parking sensors to determine ground truth parking occupancy patterns for the plurality of ground truth road links;
clustering the plurality of ground truth road links into clusters based on the ground truth parking occupancy patterns; and
designating the clusters as a plurality of link categories,
wherein the link category is matched to the road link from among the plurality of link categories.

6. The method of any of claims 1 to 5, wherein the machine learning model further classifies a probability of parking availability for the road link, the method further comprising:
determining whether parking is available on the road link by comparing the probability of parking availability to a parking availability threshold,
wherein said parking is not available on the road link when the probability of parking availability is less than the parking availability threshold; and
wherein said parking is available on the road link when the probability of parking availability is greater than the parking availability threshold.

7. The method of claim 6, wherein the parking availability threshold is determined by varying one or more candidate parking availability thresholds to maximize a classification accuracy of the machine learning model with respect to ground truth data, and designating the varied one or more candidate parking availability thresholds corresponding to a maximum classification accuracy as the parking availability threshold.

8. The method of any of claims 1 to 7, further comprising:
selecting the one or more classification features based on whether the one or more classification features are available in a specified geographic database.

9. The method of any of claims 1 to 8, further comprising:
determining classification power information for the one or more classification features of the machine learning model;
ranking the one or more classification features based on classification power information; and
removing at least one classification from among the one or more classification features based on the ranking.

10. An apparatus for generating parking occupancy data using a machine learning model, comprising means for performing the method of any of claims 1 to 9.

11. The apparatus of claim 11, wherein said means comprise:
at least one processor; and
at least one memory including computer program code for one or more programs,
the at least one memory and the computer program code configured to, with the at least one processor, cause the apparatus to perform the method of any of claims 1 to 9.

12. A computer program code, said computer program code when executed by a processor causing an apparatus to perform the method according to any of claims 1 to 9.

13. The computer program code, wherein said computer program code is carried by a non-transitory computer-readable storage medium.
